(19) Europäisches Patentamt
European Patent Office
Office européen des brevets

(11) **EP 4 726 754 A1**

(12) **EUROPEAN PATENT APPLICATION**

(43) Date of publication:
**15.04.2026 Bulletin 2026/16**

(51) International Patent Classification (IPC):
***H01G 4/012*** (2006.01)    ***H01G 4/005*** (2006.01)
***H01G 4/232*** (2006.01)    ***H01G 4/38*** (2006.01)

(21) Application number: **25207011.5**

(22) Date of filing: **06.10.2025**

(52) Cooperative Patent Classification (CPC):
**H01G 4/012; H01G 4/005;** H01G 4/232; H01G 4/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 US 202418913885**

(71) Applicant: **NXP B.V.**
**5656 AG Eindhoven (NL)**

(72) Inventors:
• **Sque, Stephen John**
**5656AG Eindhoven (NL)**
• **Willemsen, Marnix Bernard**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **CONDUCTIVE PLATE GEOMETRIES**

(57) One example discloses an electric device, including: a first capacitor including a conductive plate; wherein the conductive plate has a first edge-radius and a second edge-radius; and wherein the first edge-radius is different from the second edge-radius.

200

Fig. 2A

EP 4 726 754 A1

## Description

The present specification relates to systems, methods, apparatuses, devices, articles of manufacture and instructions for adjusting a shape of a capacitor.

<u>SUMMARY</u>

According to an example embodiment, an electric device, comprising: a first capacitor including a conductive plate; wherein the conductive plate has a first edge-radius and a second edge-radius; and wherein the first edge-radius is different from the second edge-radius.

In another example embodiment, the conductive plate is configured to be proximate to a first adjacent structure and a second adjacent structure; the conductive plate is configured to be held at a first electrostatic potential; the first adjacent structure is configured to be held at a second electrostatic potential; the second adjacent structure is configured to be held at a third electrostatic potential; the first electrostatic potential is closer to the second electrostatic potential than the third electrostatic potential; the first edge-radius is smaller than the second edge-radius; the first edge-radius is closer to the first adjacent structure than the second adjacent structure; and the second edge-radius is further from the first adjacent structure than the second adjacent structure.

In another example embodiment, the first edge-radius is a first corner-radius and the second edge-radius is a second corner-radius.

In another example embodiment, the first edge-radius is a first non-zero edge-radius and the second edge-radius is a second non-zero edge-radius.

In another example embodiment, the first capacitor has an asymmetric shape.

In another example embodiment, the conductive plate of the first capacitor is a first conductive plate; the first capacitor includes a second conductive plate; and the first and second conductive plates are substantially parallel to each other.

In another example embodiment, the first and second conductive plates are substantially symmetrical to each other.

In another example embodiment, further comprising a second capacitor; wherein the second capacitor includes a conductive plate; wherein the first edge-radius is smaller than the second edge-radius; and wherein the first edge-radius is closer to the conductive plate of the second capacitor than the second edge-radius.

In another example embodiment, further comprising a second capacitor; wherein the conductive plate of the second capacitor has a third edge-radius and a fourth edge-radius; wherein the first edge-radius is smaller than the second edge-radius; wherein the third edge-radius is smaller than the fourth edge-radius; and wherein the first edge-radius and the third edge-radius are closer together than the second edge-radius and the fourth edge-radius.

In another example embodiment, the first capacitor and the second capacitor are configured to be held at a same electrostatic or voltage potential.

In another example embodiment, the first capacitor and the second capacitor are included in a two-dimensional array of capacitors.

In another example embodiment, the first capacitor and the second capacitor are adjacent to each other.

In another example embodiment, the first capacitor and the second capacitor are symmetrical;

In another example embodiment, further comprising a second capacitor and a third capacitor; wherein the second capacitor is on a same surface as and spatially between the first capacitor and the third capacitor; wherein the first edge-radius is smaller than the second edge-radius; and wherein the first edge-radius is closer to the second capacitor than the second edge-radius.

In another example embodiment, the second capacitor includes a conductive plate having a third edge-radius and a fourth edge-radius; and the third edge-radius is substantially same as the first edge-radius and the fourth edge-radius.

In another example embodiment, the third capacitor includes a conductive plate having a fifth edge-radius and a sixth edge-radius; wherein the fifth edge-radius is substantially same as the first edge-radius, the third edge-radius, and the fourth edge-radius.

In another example embodiment, the fifth edge-radius is closer to the second capacitor than the sixth edge-radius.

In another example embodiment, the conductive plates of the first, second and third capacitors all have a same total area.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

<u>BRIEF DESCRIPTION OF THE DRAWINGS</u>

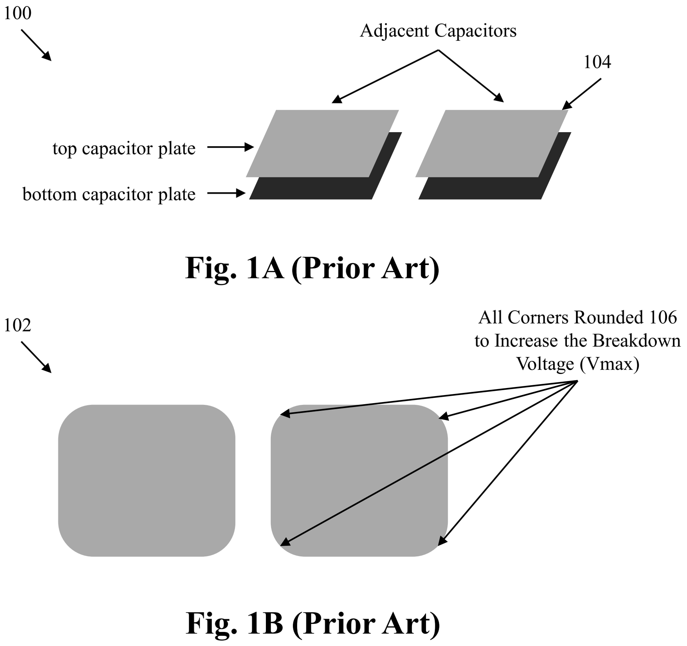

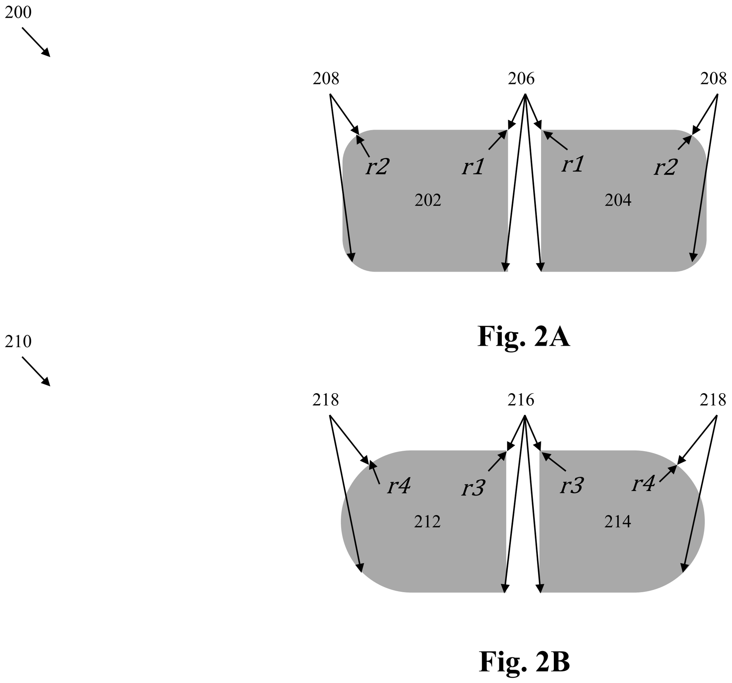

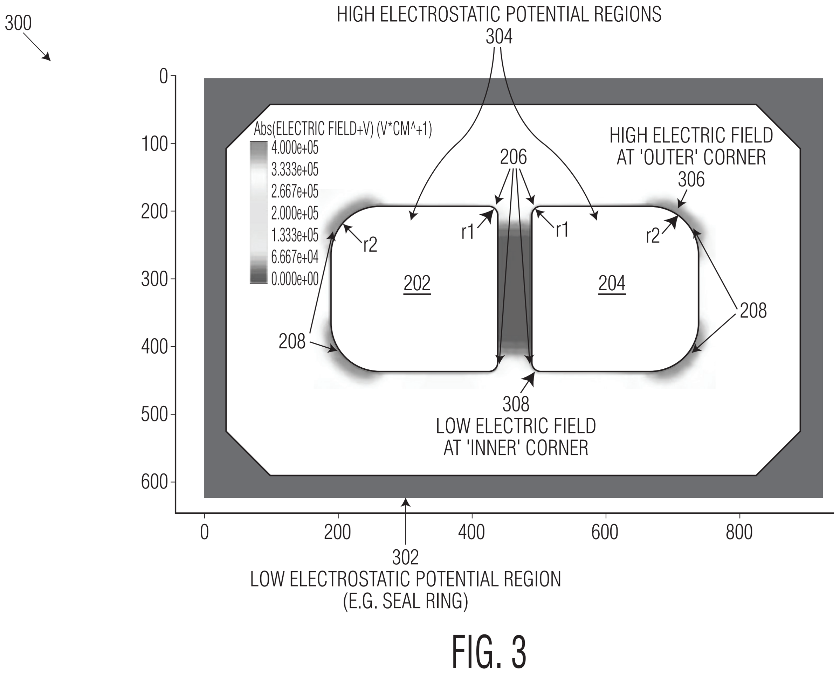

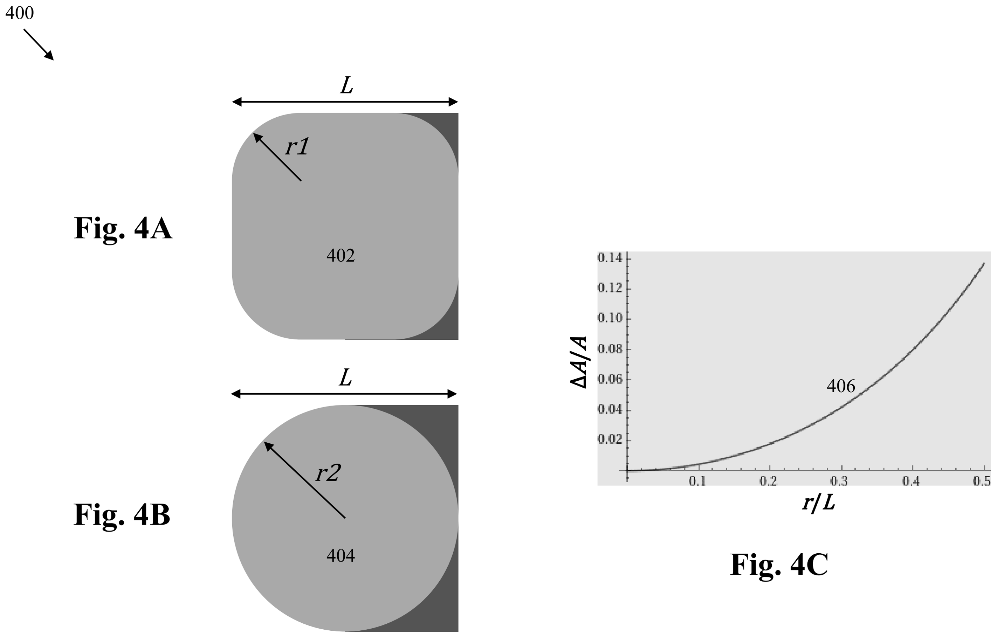

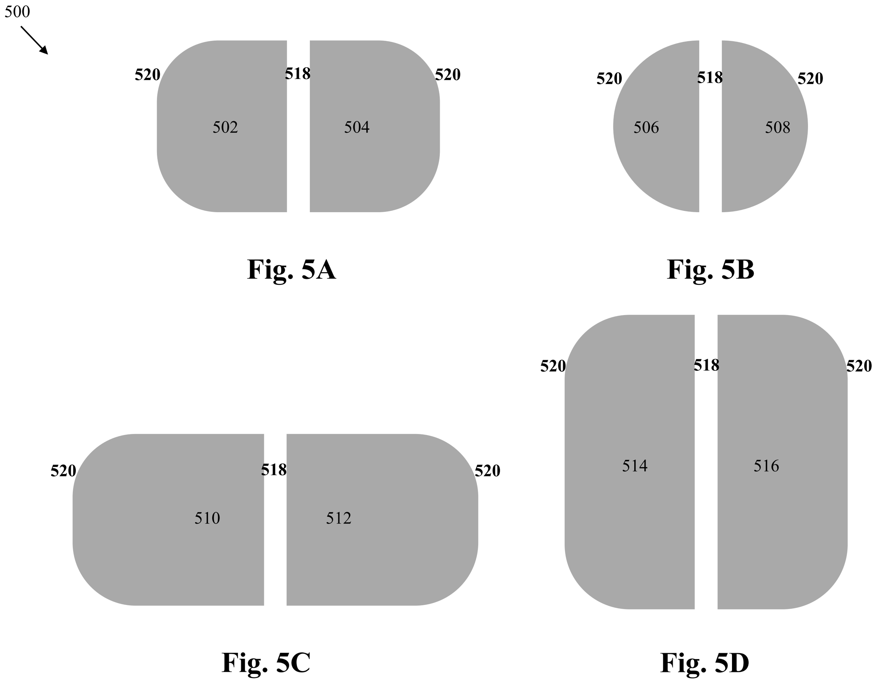

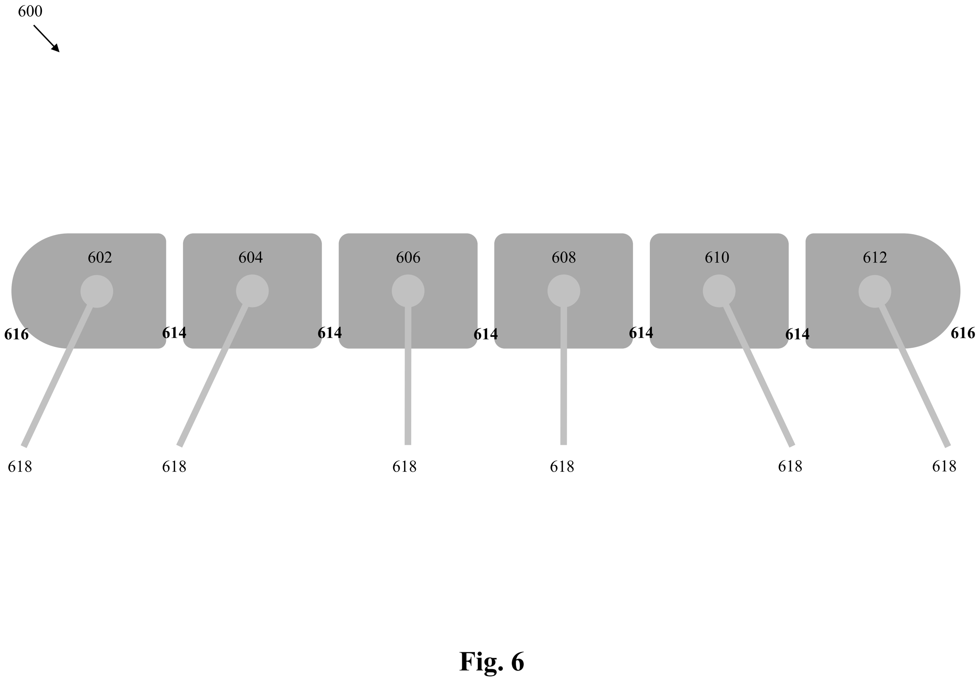

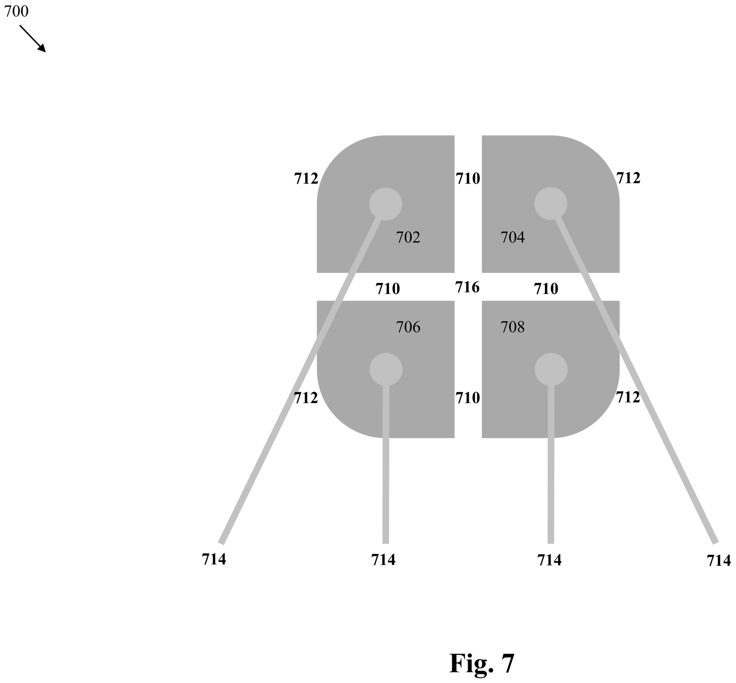

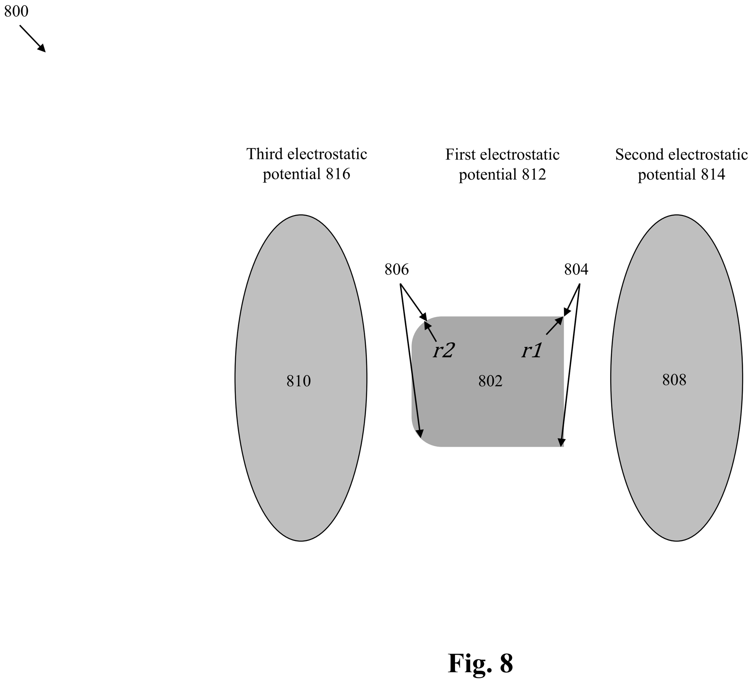

<u>Figures 1A, 1B</u> represent perspective and plan views of example parallel-plate capacitors.
<u>Figures 2A, 2B</u> represent first and second example sets of adjacent parallel-plate capacitors having asymmetric conductive plates.
<u>Figure 3</u> represents an example electromagnetic field simulation of the adjacent capacitors having asymmetric conductive plates.
<u>Figures 4A, 4B, 4C</u> represent an example edge-radius for various example embodiments of the adjacent capacitors having asymmetric conductive plates.
<u>Figures 5A, 5B, 5C, 5D</u> represent third, fourth, fifth and sixth example embodiments of the adjacent capacitors having asymmetric conductive plates.
<u>Figure 6</u> represents a seventh example embodiment of the adjacent capacitors having asymmetric conductive plates.
<u>Figure 7</u> represents an eighth example embodiment of the adjacent capacitors having asymmetric conductive plates.
<u>Figure 8</u> represents an example embodiment of a capacitor having an asymmetric conductive plate proximate to two adjacent conductive structures.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

<u>DETAILED DESCRIPTION</u>

<u>Figures 1A, 1B</u> represent perspective 100 and plan 102 views of example parallel-plate capacitors.
Dielectric breakdown of parallel-plate capacitors limits their useful lifetime. Dielectric breakdown typically first occurs at any sharp edges 104 of a structure, such as the corners of a capacitor's conductive plates. This is because the electric field is highest where bending of the electrostatic potential contours is the greatest (e.g. around corners).
To reduce a magnitude of this electric field before dielectric breakdown occurs (e.g. increase a device's breakdown voltage (Vmax) and lifetime), any sharp edges and corners are rounded 106. However, such edge and corner rounding decreases an area of the capacitor's conductive plate, and thereby reduces the capacitor's capacitance. Such capacitance reductions are often undesirable and are compensated by increasing the size of the capacitor's conductive plates and thus impacting a die area required.
Now discussed are a set of adjacent parallel-plate capacitors (e.g. a differential pair) with asymmetric rounding of their conductive plates' adjacent and non-adjacent edges (e.g. corners). Asymmetry both increases the breakdown voltage (Vmax) of each adjacent capacitor, but also increases each capacitor's plate area and thereby increases the capacitor's capacitance.
<u>Figures 2A, 2B</u> represent first 200 and second 210 example sets of adjacent parallel-plate capacitors having asymmetric conductive plates. Adjacent edges are herein defined as where the conductive plates are closer to each other. Non-adjacent edges are herein defined as where the conductive plates are further away from each other. As discussed herein below, an "edge" having a "non-zero finite radius" is a "curved edge", and an "edge" having an "infinite radius" is a "straight edge".
<u>Figure 2A</u> shows the first example set 200 of adjacent asymmetric conductive plates which include a first conductive plate 202 (top or bottom) of a first capacitor, a second conductive plate 204 (top or bottom) of a second capacitor, a set of adjacent edges 206 (e.g. adjacent corners) having a first edge-radius (r1), and a set of non-adjacent edges 208 (e.g. non-adjacent corners) having a second edge-radius (r2).
The adjacent first edge-radius (r1) is different than the non-adjacent second edge-radius (r2). In various example embodiments, the adjacent first edge-radius (r1) is less than (i.e. is a sharper corner) the non-adjacent second edge-radius (r2). Thus the conductive plates have less rounding of their adjacent corners than for their non-adjacent corners.
<u>Figure 2B</u> shows the second example set 210 of adjacent asymmetric conductive plates which include a first conductive plate 212 (top or bottom) of a first capacitor and which include a second conductive plate 214 (top or bottom) of a second capacitor, a set of adjacent edges 216 (e.g. adjacent corners) having third edge-radius (r3), and a set of non-adjacent edges 218 (e.g. non-adjacent corners) having a fourth edge-radius (r4).
The adjacent third edge-radius (r3) is different than the non-adjacent fourth edge-radius (r4). In various example embodiments, the adjacent third edge-radius (r3) is less than (i.e. is a sharper corner) the non-adjacent fourth edge-radius (r4).

As further shown in Figure 3, the adjacent edges 206 need not be as rounded as non-adjacent edges 208 since an electric field surrounding the adjacent edges 206 is not as high in the vicinity of the adjacent edges 206, especially if the adjacent conductive plates 202, 204 are at similar electrostatic potentials (i.e. the voltage between the two upper and the two lower sets of adjacent conductive plates is small/low).

The more the electrostatic potentials to be applied to the adjacent edges 206, 216 are similar (i.e., within a few volts of each other), then the electric field between the adjacent edges 206, 216 will be lower than at the non-adjacent edges 208, 218. As a result, first edge-radius (r1) can be made much smaller (i.e. less rounded) than the second edge-radius (r2), which increases the plate area and hence a capacitance of the capacitors.

Thus removing, or at least significantly reducing, unnecessary rounding at the adjacent edges 206, 216, can be used to either create a higher capacitance, or a increased conductive plate area, all the while maintaining a same maximum voltage (Vmax) handling capability.

If an increase in capacitive area is not required, then rounding of the non-adjacent edges 208, 218 can be further increased, thereby further increasing the breakdown voltage (Vmax) of each adjacent capacitor.

The same differing edge-radius principle can be applied to the shape of both the top and bottom conductive plates of the parallel-plate capacitors. In some example embodiments, the top conductive plates have a different size than their bottom conductive plates.

Figure 3 represents an example 300 electromagnetic field simulation of the adjacent capacitors having asymmetric conductive plates 202, 204. Shown in the example 300 is a low electrostatic potential region 302 (e.g. at a semiconductor seal ring) and high electrostatic potential regions 304 on the conductive plates 202, 204.

Based on the simulation, these low and high electrostatic potential regions 302, 304 create a high electric field 306 at the non-adjacent edges (outer corners) 208 of the conductive plates 202, 204 and a low electric field 308 at adjacent edges (inner corners) 206 of the conductive plates 202, 204.

The simulations confirm that an electric field magnitude at the adjacent edges 206 of the conductive plates 202, 204 forming a differential pair of capacitors, is much lower than (i.e. less chance of dielectric breakdown) than at the non-adjacent edges 208, and thus the adjacent edges 206 can be made significantly sharper (i.e. less rounded) than the non-adjacent edges 208 before an electric field near adjacent edges 206 becomes comparable to that at the non-adjacent edges 208. This increases the useful area of the capacitors, and hence the capacitance.

Note, dielectric breakdown is a weakest-link phenomena, and will almost always start at the red region first.

In this simulation, the conductive plates 202, 204 are at a same electrostatic potential (i.e. the voltage between them is zero), but in other example embodiments they could be at slightly or greatly differing electrostatic potentials, and the differing edge-radius design would still have some benefit.

Figures 4A, 4B, 4C represent an example 400 edge-radius for various example embodiments of asymmetric conductive plates 402, 404.

Figure 4A, shows a partially square plates with side length L, where the corners have been rounded with a radius r1, the relative area gain from not rounding two of the corners is given by:

$$\frac{\Delta A}{A} = \frac{\frac{1}{2}(4 - \pi)r^2}{L^2 - (4 - \pi)r^2},$$

where 'r' in this equation is 'r1' in Figure 4A.

Figure 4B, is a maximized example where the edge-radius (r2) is as large as possible. In this example, if r = L/2, then a relative area gain is given by:

$$\left(\frac{\Delta A}{A}\right)_{\max} = \frac{2}{\pi} - \frac{1}{2} \approx 13.7\%$$

Figure 4C, shows a relative area gain 406 as a function of an edge-radius defined as a proportion of a side length (r/L). This Figure demonstrates that a larger an original edge-radius (corner rounding), then a greater a relative area gain from not rounding two of the corners.

Figures 5A, 5B, 5C, 5D represent third, fourth, fifth and sixth example embodiments 500 of the adjacent capacitors having asymmetric conductive plates. These examples 500 show a respective set of first top conductive plates 502, 506, 510, 514 for forming a first capacitor with another set of bottom conductive plates (not shown), and a respective set of second conductive plates 504, 508, 512, 516 for forming a second capacitor with another set of bottom conductive plates (also not shown).

These conductive plates have a respective set of adjacent edges 518, having a first edge-radius, and a respective set of non-adjacent edges 520, having a second edge-radius.

In various other example embodiments, other lateral dimensions and edge-radii can be used, so that less rounded adjacent edges (e.g. corners) can be used as compared to their more rounded non-adjacent edges (e.g. corners).

Figure 6 represents a seventh example embodiment 600 of the adjacent capacitors having asymmetric conductive plates. This example 600 shows a respective set of first top conductive plates 602, 604, 606, 608, 610, 612 for forming a set of capacitors with another set of bottom conductive plates (not shown).

These conductive plates have a respective set of adjacent edges 614, having a first edge-radius, and a respective set of non-adjacent edges 616, having second edge-radius. Circuit connections 618 to these conductive plates are also shown.

This example 600 shows several capacitors located next to each other in a row. If all of the capacitors are at approximately the same electrostatic potential, then only the non-adjacent edges 616 (i.e. the outermost capacitors 602, 612) would be rounded to prevent breakdown to the surroundings (at different potential).

In example embodiments where these capacitors are grouped in pairs and used in a context where good matching is required, then the non-adjacent (more-rounded) capacitors 602, 612 would have to be made somewhat larger (in extent) than the adjacent (more-rectangular) capacitors 604, 606, 608, 610 for the areas of the non-adjacent (more-rounded) capacitors 602, 612 to be the same as the adjacent (more-rectangular) capacitors 604, 606, 608, 610. In this example embodiment 600, all of the conductive plates have a same total area.

Figure 7 represents an eighth example embodiment 700 of the adjacent capacitors having asymmetric conductive plates. This example 700 shows a respective set of first top conductive plates 702, 704, 706, 708 for forming a set of capacitors with another set of bottom conductive plates (not shown).

These conductive plates have a respective set of adjacent edges 710, having a first edge-radius, and a respective set of non-adjacent edges 712, having second edge-radius. Circuit connections 714 to these conductive plates are also shown.

This example 700 shows several capacitors located next to each other in a two-dimensional array of capacitors. Again, if all of the capacitors are at approximately the same electrostatic potential, then only the non-adjacent edges 712 would be rounded to prevent dielectric breakdown to the surroundings (at different potential). In various example embodiments, an arbitrarily large array of capacitors can be fabricated that applies the discussed variable edge-radius technique.

This example 700 shows these capacitors in a "common-centroid" arrangement, which is sometimes used for achieving accurate matching. Common centroid is a "center of mass" concept where for example two capacitors share a location of a same center of mass.

In other example embodiments, two of the capacitors 702, 704, 706, 708 could be deleted resulting in a chess board or diagonal topology, having a set of adjacent corners 716. In this case, only two of the adjacent corners 716 would have less rounding, while all other conductive plate corners would need to have more rounding.

Figure 8 represents an example embodiment 800 of a capacitor having an asymmetric conductive plate 802 proximate to two adjacent conductive structures 808, 810. The conductive plate 802 has a first edge-radius (r1) 804 that is less than a second edge-radius (r2) 806.

In this example embodiment, during electrical circuit operation, the conductive plate 802 is at a first electrostatic potential 812, the first adjacent structure 808 is at a second electrostatic potential 814, and the second adjacent structure 810 is at a third electrostatic potential 816.

This example 800 with these particular edge-radii 804, 806 works best if the second electrostatic potential 814 of the first adjacent structure 808 is substantially similar to the first electrostatic potential 812 of the conductive plate 802, and if the third electrostatic potential 816 of the second adjacent structure 810 is substantially different from the first electrostatic potential 812 of the conductive plate 802.

This is because, as mentioned above in the Figures 2A, 2B discussion, when electrostatic potentials are similar, then the electric field will be lower, as compared to when electrostatic potentials are different, then the electric field will be higher.

In various example applications, pairs of such asymmetric capacitors can be used in products in which galvanic isolation is required (i.e. in products in which there are two parts that are at greatly different (DC) voltage levels) but which need to communicate with each other by sending electric signals. Such example applications can include where (high-voltage) capacitors sustain (block) the large DC voltage but allow AC signals through (in a differential manner) for communication. Additional example applications can include gate drivers and on-board charging (OBC) systems for electric vehicles.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

**Claims**

1. An electric device, comprising:

   a first capacitor including a conductive plate;
   wherein the conductive plate has a first edge-radius and a second edge-radius; and
   wherein the first edge-radius is different from the second edge-radius.

2. The device of claim 1:

   wherein the conductive plate is configured to be proximate to a first adjacent structure and a second adjacent structure;
   wherein the conductive plate is configured to be held at a first electrostatic potential;
   wherein the first adjacent structure is configured to be held at a second electrostatic potential;
   wherein the second adjacent structure is configured to be held at a third electrostatic potential;
   wherein the first electrostatic potential is closer to the second electrostatic potential than the third electrostatic potential;
   wherein the first edge-radius is smaller than the second edge-radius;
   wherein the first edge-radius is closer to the first adjacent structure than the second adjacent structure; and
   wherein the second edge-radius is further from the first adjacent structure than the second adjacent structure.

3. The device of claim 1 or 2:
   wherein the first edge-radius is a first corner-radius and the second edge-radius is a second corner-radius.

4. The device of claim 1 or 2:
   wherein the first edge-radius is a first non-zero edge-radius and the second edge-radius is a second non-zero edge-radius.

5. The device of any preceding claim:
   wherein the first capacitor has an asymmetric shape.

6. The device of any preceding claim:

wherein the conductive plate of the first capacitor is a first conductive plate;
wherein the first capacitor includes a second conductive plate; and
wherein the first and second conductive plates are substantially parallel to each other.

7. The device of claim 6:
wherein the first and second conductive plates are substantially symmetrical to each other.

8. The device of any preceding claim:

further comprising a second capacitor;
wherein the second capacitor includes a conductive plate;
wherein the first edge-radius is smaller than the second edge-radius; and
wherein the first edge-radius is closer to the conductive plate of the second capacitor than the second edge-radius.

9. The device of any preceding claim:

further comprising a second capacitor;
wherein the conductive plate of the second capacitor has a third edge-radius and a fourth edge-radius;
wherein the first edge-radius is smaller than the second edge-radius;
wherein the third edge-radius is smaller than the fourth edge-radius; and
wherein the first edge-radius and the third edge-radius are closer together than the second edge-radius and the fourth edge-radius.

10. The device of claim 9:
wherein the first capacitor and the second capacitor are configured to be held at a same electrostatic or voltage potential.

11. The device of claim 9 or 10:
wherein the first capacitor and the second capacitor are included in a two-dimensional array of capacitors.

12. The device of any one of claims 9 to 11:
wherein the first capacitor and the second capacitor are adjacent to each other.

13. The device of any one of claims 9 to 12:
wherein the first capacitor and the second capacitor are symmetrical;

14. The device of any preceding claim:

further comprising a second capacitor and a third capacitor;
wherein the second capacitor is on a same surface as and spatially between the first capacitor and the third capacitor;
wherein the first edge-radius is smaller than the second edge-radius; and
wherein the first edge-radius is closer to the second capacitor than the second edge-radius.

15. The device of claim 14:

wherein the second capacitor includes a conductive plate having a third edge-radius and a fourth edge-radius; and
wherein the third edge-radius is substantially same as the first edge-radius and the fourth edge-radius.

Adjacent Capacitors

104

top capacitor plate →

bottom capacitor plate →

**Fig. 1A (Prior Art)**

EP 4 726 754 A1

102

All Corners Rounded 106
to Increase the Breakdown
Voltage (Vmax)

**Fig. 1B (Prior Art)**

EP 4 726 754 A1

200

**Fig. 2A**

210

**Fig. 2B**

FIG. 3

400

**Fig. 4A**

*L*

*r1*

402

**Fig. 4B**

*L*

*r2*

404

**Fig. 4C**

$\Delta A/A$

0.14
0.12
0.10
0.08
0.06
0.04
0.02

406

0.1    0.2    0.3    0.4    0.5

*r/L*

EP 4 726 754 A1

500

520      518      520

502      504

**Fig. 5A**

520      518      520

506      508

**Fig. 5B**

520      518      520

510      512

**Fig. 5C**

520      518      520

514      516

**Fig. 5D**

EP 4 726 754 A1

**Fig. 6**

**Fig. 7**

Fig. 8

Europäisches
Patentamt
European
Patent Office
Office européen
des brevets

## EUROPEAN SEARCH REPORT

**Application Number**

EP 25 20 7011

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/235197 A1 (SIZOV VICTOR [DE] ET AL) 23 July 2020 (2020-07-23) * paragraphs [0007], [0014], [0015] - [0017], [0019] - [0020], [0052], [0054], [0063] - [0067]; figures 2, 3a, 3b, 3c,11,12,13 * * paragraphs [0025] - [0027], [0056] * | 1-15 | INV. H01G4/012 H01G4/005 <br><br> ADD. H01G4/232 H01G4/38 |
| X <br> A | US 10 242 803 B2 (VQ RES INC [US]) 26 March 2019 (2019-03-26) * column 7, lines 1-22, 53-58; figures 8A, 9C * | 1 <br> 2-15 | |
| A | EP 2 658 126 A1 (NXP BV [NL]) 30 October 2013 (2013-10-30) * paragraphs [0012], [0023], [0032] * | 1-15 | |
| A | US 2024/145176 A1 (BEROLINI MARIANNE [US]) 2 May 2024 (2024-05-02) * paragraphs [0027], [0030] - [0031], [0070] - [0074], [0164] - [0167] * | 1-15 | |
| A | JP 2007 012711 A (TDK CORP) 18 January 2007 (2007-01-18) * paragraphs [0012] - [0017], [0019], [0031], [0040] * | 1-15 | **TECHNICAL FIELDS SEARCHED (IPC)** <br><br> H01G |

The present search report has been drawn up for all claims

| Place of search | Date of completion of the search | Examiner |
|---|---|---|
| Munich | 4 February 2026 | Merz, Anna |

EPO FORM 1503 03.82 (P04C01)

## ANNEX TO THE EUROPEAN SEARCH REPORT
## ON EUROPEAN PATENT APPLICATION NO.

EP 25 20 7011

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| US 2020235197 | A1 | 23-07-2020 | DE 102020101535 | A1 | 23-07-2020 |
| | | | GB 2581952 | A | 09-09-2020 |
| | | | JP 2020129657 | A | 27-08-2020 |
| | | | JP 2025037890 | A | 18-03-2025 |
| | | | US 2020235197 | A1 | 23-07-2020 |
| US 10242803 | B2 | 26-03-2019 | US 2017018365 | A1 | 19-01-2017 |
| | | | US 2019214196 | A1 | 11-07-2019 |
| EP 2658126 | A1 | 30-10-2013 | CN 103378066 | A | 30-10-2013 |
| | | | EP 2658126 | A1 | 30-10-2013 |
| | | | US 2013281033 | A1 | 24-10-2013 |
| US 2024145176 | A1 | 02-05-2024 | CN 120077456 | A | 30-05-2025 |
| | | | DE 112023004557 | T5 | 11-09-2025 |
| | | | TW 202437286 | A | 16-09-2024 |
| | | | US 2024145176 | A1 | 02-05-2024 |
| | | | WO 2024097033 | A1 | 10-05-2024 |
| JP 2007012711 | A | 18-01-2007 | NONE | | |

EPO FORM P0459

For more details about this annex : see Official Journal of the European Patent Office, No. 12/82